# EUROPEAN PATENT SPECIFICATION

(11) **EP 0 750 219 B1**
(45) Date of publication and mention of the grant of the patent: **02.05.2003**
(21) Application number: 96108985.1
(22) Date of filing: 05.06.1996
(51) Int. Cl.: G03B 37/00, G02B 5/08, H04N 5/262, G08B 13/196

(54) **Multi-direction camera**
Mehrrichtungskamera
Caméra multidirectionnelle

(30) Priority: 22.06.1995 JP 17935195; 22.06.1995 JP 17935295
(43) Date of publication of application: 27.12.1996
(73) Proprietor: Niles Parts Co., Ltd., Tokyo 143 (JP)
(72) Inventor: Fukuda, Takeshi, c/o Niles Parts Co., Ltd., Tokyo 143 (JP); Kawamura, Hiroyuki, c/o Niles Parts Co., Ltd., Tokyo 143 (JP)
(74) Representative: Luderschmidt, Schüler & Partner GbR

(56) References cited:
- US-A- 4 167 756
- US-A- 4 288 819
- US-A- 5 293 243
- DATABASE WPI Section PQ, Week 9527 Derwent Publications Ltd., London, GB; Class Q17, AN 95-202531 XP002015799 & JP-A-07 105 484 (HONDA MOTOR CO LTD) , 21 April 1995

## Description

The invention relates to a multi-direction camera in accordance with the preamble of claim 1.

Such a multi-direction camera is disclosed in Japanese Unexamined Utility Model Publication Hei No. 1-109447. This camera allows to check traffic conditions on a crossing road for safety on the basis of images taken by a camera mounted on the forward end portion of the automobile. Thus if an automobile equipped with such a camera enters a crossing, the driver gets information on other oncoming vehicles, even if the crossing is a blind corner, which under normal conditions is difficult to check as to other vehicles approaching. Thus safety is increased irrespective of whether there are traffic lights at this crossing or not.

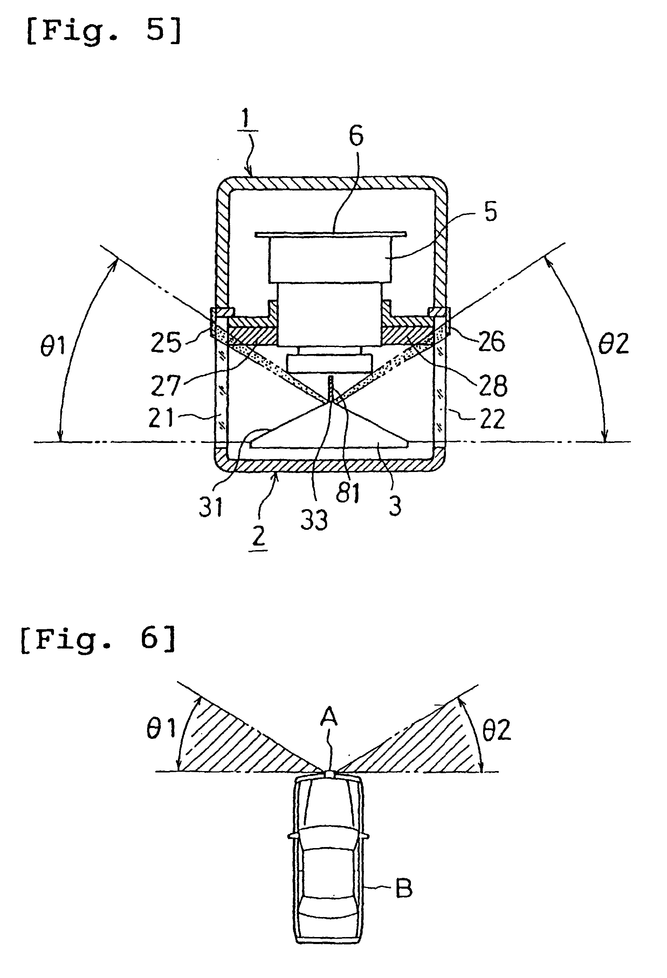

Figures 6-10 show a prior art multi-direction camera. Figure 6 is a top view of an automobile B, on which a multi-direction camera A is mounted, and shows angles of view θ1 and θ2 that the camera shoots images in the directions to the left and the right of the automobile.

The multi-direction camera is constructed as follows:

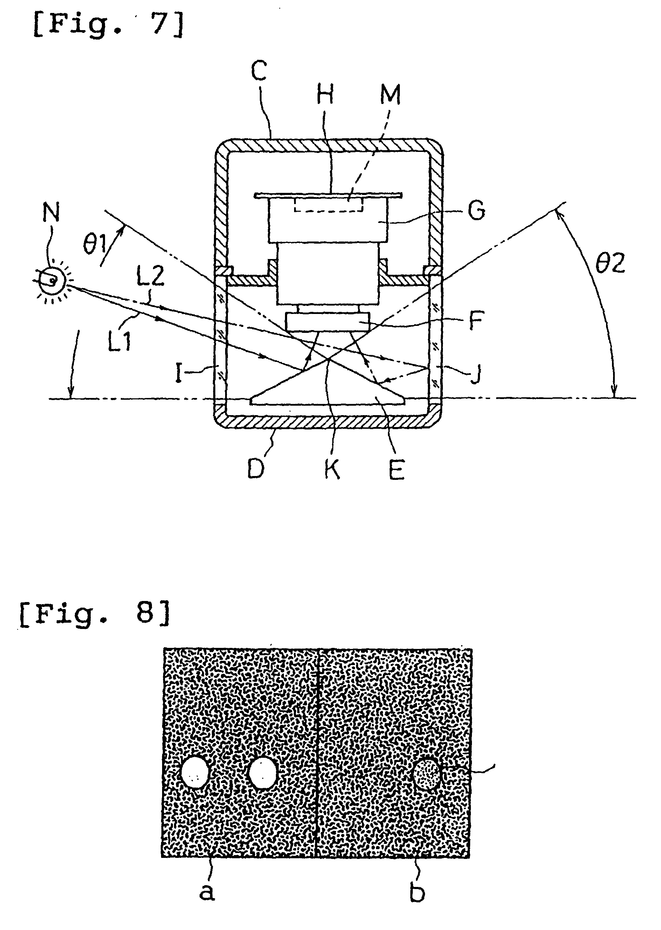

As shown in figure 7, the multi-direction camera A includes a case C, cover D, mirror E, lens F, lens mount G, circuit board H, and windows I and J. The mirror E reflects light L1, which is incident from the left and right directions with respect to an edge line K of the mirror E. The lens F receives the reflected light and causes an image to be formed on an image-sensing device M in the form of a CCD (charge coupled device) mounted on the circuit board H. In this manner, the multi-direction camera A takes the left and right hand images viewed in the directions to the left and right of the automobile B, the angles of view being θ1 and θ2, respectively.

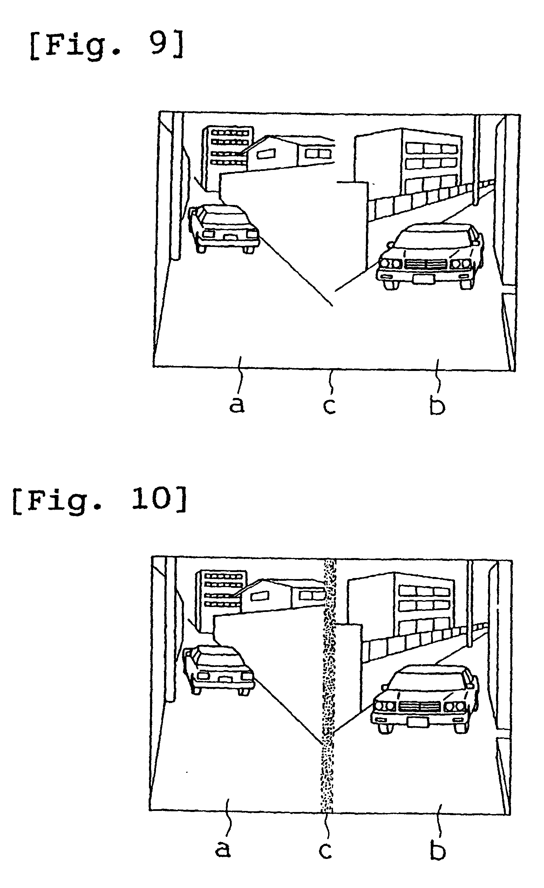

This known multi-direction camera has a drawback in that the left and right images a and b formed on the CCD device M are not clearly bounded by boundary line c. For example there is nothing to indicate the boundary c between the two images as may be seen from figure 9. Thus the left image a is not clearly distinguished from the right image b or the left and right images are not quite focussed near the boundary c as shown in figure 10. The latter case is due to the fact that the edge line K of the mirror E, which corresponds to the boundary line c, appears as a part of the image; however, the edge line K is not quite focussed, since the edge line K is too close to the lens F to be accurately focussed.

In order to solve this problem an electronic superimposing circuit might be employed in order to display the left and right images a and b with a boundary line c electrically superimposed therebetween. However, superimposing a boundary line c by electronic circuitry is disadvantageous in that the costs of the multi-direction camera are increased.

Above this, in the known multi-direction camera there may occur ghost images. The principle of how these ghost images are produced will now be described with reference to figure 7 and 8. For example, at night the left window I receives light beams from light sources N such as headlights of other vehicles oncoming on the left side of the automobile. The light beams L1 are reflected by the mirror E and are then received by the lens F, which in turn forms on the CCD device M. Thus the image of the headlight sources N appear in the left image a as shown in figure 8. If there is no light source on the road to the right of the automobile, no image should appear in the right image b in figure 8. However, light beams L2 incident through the left window I are reflected by the right window J as shown in figure 7, and are further reflected by the mirror E. The reflected light beams are received by the lens F which in turn forms images of the light beams L2 on the CCD device M. The light beams L2 result in a ghost image of the light sources N in the right image b as shown in figure 8.

US 5,293,243 discloses a camera, which is essentially of the same construction as the above described prior art camera, i. e. it has the above-mentioned drawback.

In order to sharply define the line between the images, US 4,288,819 proposes to mount an opaque mask in front of the image plane. However, this image device has neither a housing nor windows in this housing.

Thus the object of the present invention is to provide an improved multi-direction camera with a housing comprising windows, in which a clear boundary line is formed between a plurality of sensed images and in which the formation of ghost images is eliminated.

In accordance with the present invention this object is solved by a multi-direction camera in accordance with claim 1.

Preferred further improvements of the invention are referred to in the subclaims.

The present invention is advantageous in view of avoiding ghost images, which in the known multi-direction camera shown in figures 6 - 10 appear in the video image due to various reflections occuring within the camera.

In accordance with the invention by provision of a shield member projecting from the light deflecting means (the mirror E) the light beam L2 is cut and no ghost image is obtained.

In a preferred embodiment the shield member forms a colour filter.

Preferred embodiments of the invention will now be described in more detail referring to the drawings. Therein
- Figure 1:: is a cross sectional view shownig an essential part of a first embodiment of a multi-direction camera in accordance with the present invention;
- Figure 2:: is an exploded perspective view of the multidirection camera shown in figure 1;
- Figure 3:: illustrates a video imgage obtained with the multi-direction camera shown in figure 1, wherein a vehicle approaching to a crossing from the left does not give rise to a ghost image in the right hand image;
- Figure 4:: illustrates a video image, in which a clear boundary line between the left hand and the right hand images is shown, which is provided by the multi-direction camera of figure 1;
- Figure 5:: is a cross sectional view of an essential part of a second embodiment of a multi-direction camera in accordance with the present invention;
- Figure 6:: is a top view of an automobile equipped with a multi-direction camera;
- Figure 7:: is a cross sectional view of a prior art multi-direction camera;
- Figure 8:: illustrates a video image, in which a ghost image appears due to the construction of the prior art camera shown in figure 7;
- Figure 9:: illustrates a video image taken with a prior art multi-direction camera and showing that in this image there is nothing to indicate the boundary between the left image and the right image;
- Figure 10:: illustrates a blurred boundary between the left image and the right image in the prior art camera shown in figure 7; and
- Figure 11:: is a plan view of a modified image sensor used for providing clearly distinct left and right hand images.

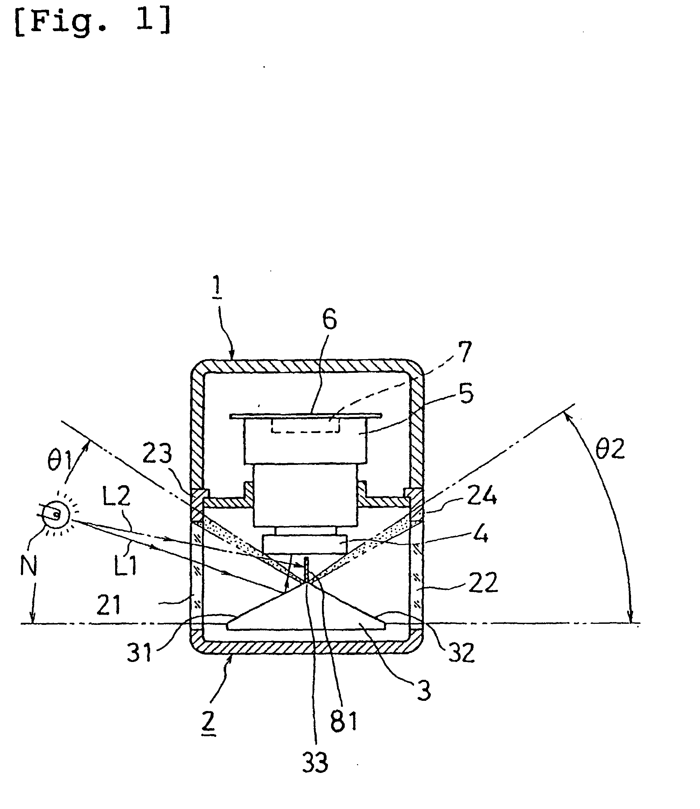

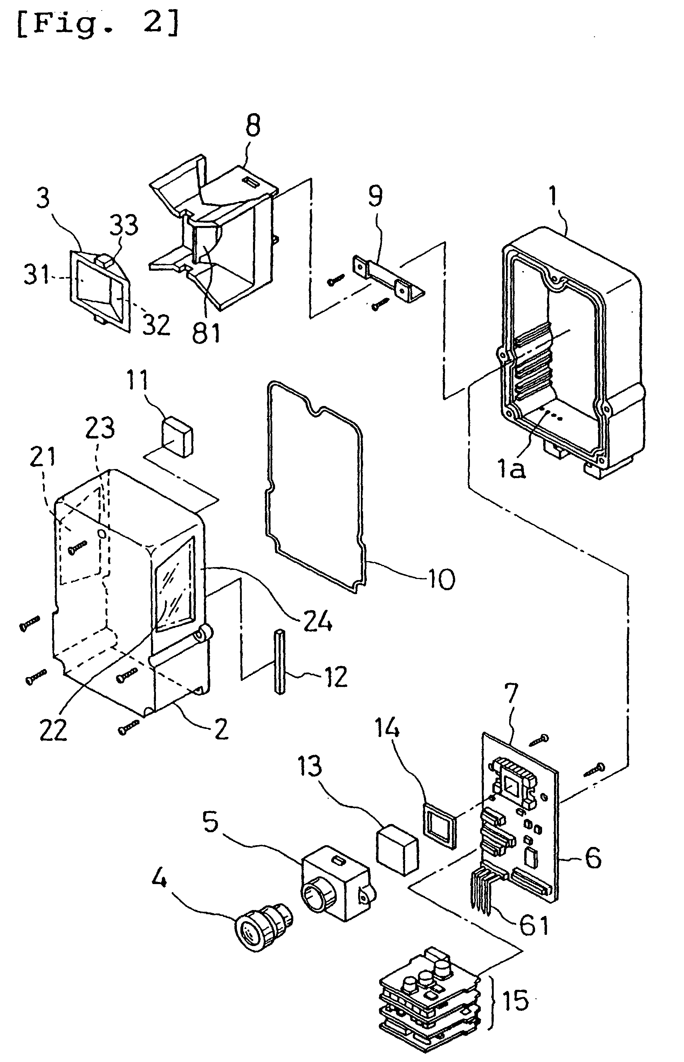

A first embodiment of the invention will now be described with references to figures 1-4.

In the figures, reference numeral 1 denotes a case, 2 a cover, 3 a mirror, 4 a lens, 5 a lens mount, 6 a circuit board, 7 an image-sensing device, 8 a mirror holder, 9 a fixing plate, 10 a packing, 11 and 12 vibroisolating rubber, 13 a filter, 14 a spacer and 15 a sub circuit board. These structural elements are now described in more detail:

The case 1 is formed of a opaque material and assembled to the cover 2 to form a housing for the camera. A packing 10 is inserted between the case 1 and the cover 2 to form a water-tight construction.

The cover 2 is opaque except for left and right windows 21 and 22. The cover is constructed by an appropriate process, for example by insert-molding the left and right windows 21 and 22 formed of a transparent acrylic resin into an opaque member, or by first forming the entire cover 2 of a transparent acrylic resin and then applying a black pigment paint to the cover 2 with the left and right windows 21 and 22 left unpainted.

The cover 2 has shields 23 and 24. The shields 23 and 24 are located such that the lens 4 receives a part of each of black images of the shields 23 and 24, and the black images serve as a boundary line c between the left image a and the right image b.

The mirror 3 is molded of a synthetic resin and has triangular end faces and two reflecting surfaces 31 and 32, on which aluminium is vapor-deposited to form mirror surfaces thereon. The two reflecting surfaces 31 and 32 meet each other at an edge line 33.

The lens 4 condensing the light reflected by the reflecting surfaces 31 and 32 of the mirror has a focal plane thereof on the surface of the later described image-sensing device 7. The focal length of lens 4 is short (about 10 to 15 mm) as is customary in small solid state TV cameras used for monitoring purposes. So the edges of the windows and the crossing street as well as vehicles approaching the crossing are both sharply imaged onto the image-sensing device 7.

The image-sensing device 7 is mounted on the circuit board 6 and the lens 4 is mounted on the circuit board 6 by means of the lens mount 5. The lens mount 5 includes a spacer 14 and a filter 13 that shields light having wave lengths other than visible light.

The circuit board 6 carries a subboard 15 and terminals 61 as well as the lens mount 5 supporting the lens 4. The terminal 61 outwardly extends to holes la in the case so that the circuit boards may be electrically connected via the terminals 61 to an AV (audi visual) apparatus, not shown, which is arranged in the passenger space of the automobile. Between the circuit board 6 and the cover 2 are inserted the vibroisolating rubber members 11 and 12, which resiliently support the circuit board 6.

The image-sensing device 7 is a device for converting the light image formed on the surface thereof into an electrical video signal. The image-sensing device takes the form of a CCD in this embodiment.

The mirror holder 8 is formed of an opaque material in one piece with a partitioning plate 81. The mirror holder 8 supports the mirror 3 and is fixed to the case by means of fixing plate 9. The partitioning plate 81 is provided on the edge line 33 and extends towards the lens 4. The partitioning plate 81 optically isolates the two reflecting surfaces 31 and 32 one from the other so that light from one surface does not enter the light path through which light from the other surface enters. This construction thus eliminates formation of ghost images. Thus the light incident through the left window 21 is reflected only by the left reflecting surface 31 and does not enter the right reflecting surface 32. Likewise, the light incident through the right window 22 is reflected only by the right reflecting surface 32 and does not enter the left reflecting surface 31.

The mirror 3 has the form of a hollow triangular prism, the upper and lower end faces of which are provided with projections 34. These cooperate with mating recesses 82 formed in the bottom portion of trough shaped upper and lower end faces of the mirror holder 8.

The multi-direction camera of the afore mentioned construction is mounted on the forward end portion of an automobile, for example, near the bumper. The lens is oriented to face a direction opposite to the direction of travel of the automobile. The left reflecting surface 31 is oriented to face a direction to the left of the automobile and the right reflecting surface 32 to face a direction to the right of the automobile. Orienting the lens to face a direction opposite to the direction of travel of the automobile, provides video images such that the images formed on the surface of the image-sensing device 7 and displayed on the screen of the AV apparatus are the same as what the driver sees by his eyes, i.e. the left image does not appear on the right in the displayed image and the right image does not appear on the left. This provides good, clear and easy to interpret visual information.

The operation of the multi-direction camera described above is as follows:

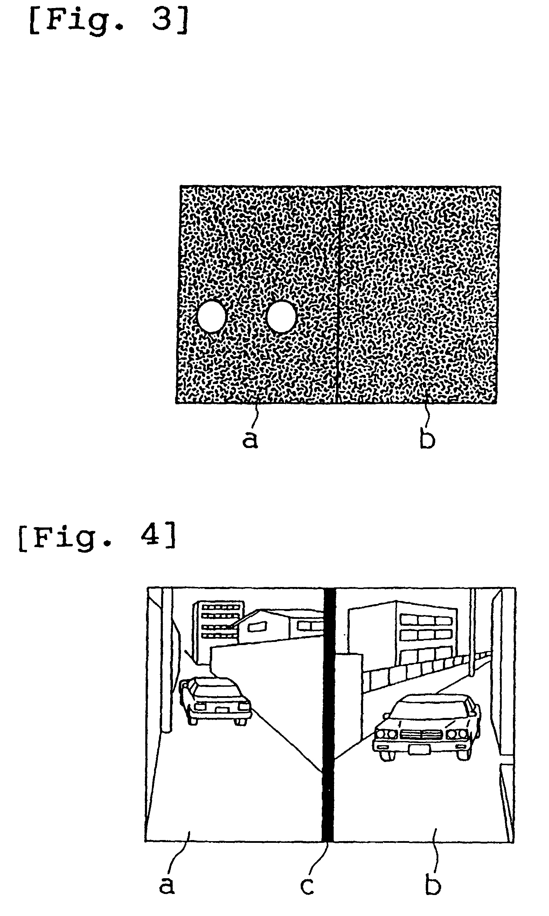

The mirror 3 reflects light incident on the reflecting surfaces 31 and 32 thereof from the directions to the left and right of the automobile, and the angles of view are θ1 and θ2, respectively. The lens 4 receives the light reflected by the mirror 3 to form images on the surface of the imgage-sensing device 7. The left image a is formed by the light incident through the left angle of view θ1 and the right image b by the light incident through the right angle of view θ2 as shown in figure 4. The black images of the shields 23 and 24 received by the lens 4 are also formed midway between the left image a and the right image b thus serving as the boundary line c. Since the shields 23 and 24 are away from the lens 4, the images of shields 23 and 24 are well focussed to form a clear image of the boundary line c.

When the vehicle equipped with the multi-direction camera at night approaches a crossing, a light beam L1 enters through the left window 21 from the light source N such as a headlight of another vehicle approaching the crossing from the left of the automobile as shown in figure 1. The light beam L1 is reflected by the left reflecting surface 31 of the mirror 3 and the lens 4 receives the reflected light beam to form a image on the image-sensing device 7. Thus an image of the light source N appears in the left image a as shown in figure 3. Since there is no light source in the direction to the right of the automobile, no image appears in the right image b in figure 3. Due to provision of the partitioning plate 81, no ghost image of the light source N in the right image b is obtained, either, as has been explained in detail above.

Figure 5 shows a second embodiment of a multi-direction camera in accordance with the present invention.

The construction of the second embodiment differs from the first embodiment as to provision of shields 25, 26, 27 and 28. Below only these shields 25, 26, 27 and 28 will be described, while description of the rest of the camera will be omitted, since these components have already been described in connection with the first embodiment. Although the shields 25 and 26 differ from the shields 27 and 28 in type, they are shown in figure 5 together for convenience of explanation.

The shields 25 and 26 of one type are, for example, an opaque tape sticked to the cover 2. The use of an opaque tape lends itself to, for example, improving existing products.

The shield 27 and 28 of the other type are in the form a black plate provided within the cover 2. If the light entering the camera from outside is reflected by the surface of the shield 27 and 28, such reflection results in poor performance of the multi-direction camera. Therefore, the surfaces of the shield 27 and 28 are preferably rough surfaces.

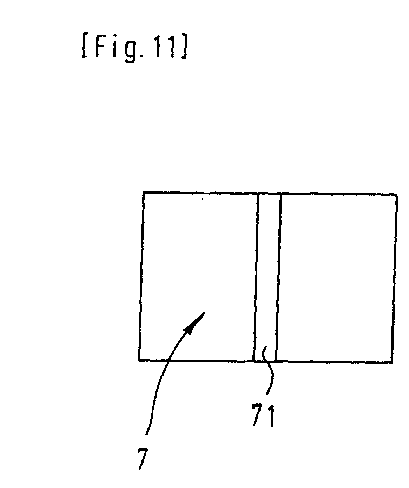

A further way of providing a sharp boundary line c between the left image a and the right image b is shown in figure 11:

An opaque strip of material 71 is attached to the centre line of the image-sensing device 7. Alternatively the opaque layer may be formed by directly printing black paint onto the front surface of the image-sensing device 7, e.g. by a screen printing process.

## Claims

1. A multi-direction camera, comprising lens means (4) and light deflecting means (3) with reflecting surfaces (31, 32) arranged in front of the lens means (4) and directing light beams received in at least two different viewing directions to the lens means (4), and comprising image sensing means (7), whereon the lens means (4) focusses the light received from the light deflecting means (3) to produce a number of adjacent part images thereon, each corresponding to one of the viewing directions, the lens means (4), the light deflecting means (3) and the image sensing means (7) being arranged in a housing (1, 2) being generally opaque and having transparent windows (21, 22) associated to each of the viewing directions, and
mark generating means (23, 24; 25, 26; 71; 81) producing a visually distinctive line or region at at least one junction defined between two adjacent part images formed on the image sensing means (7), the mark generating means being formed by shield means (23, 24; 25, 26; 71; 81), **characterized in that** the shield means are optically isolating the reflecting surfaces and preventing light entering one of the windows (21, 22) from passing between one reflecting surface (31, 32) and the lens means (4) and being reflected by the other window (22, 21) towards the other reflecting surface (32, 31).

2. A multi-direction camera in accordance with claim 1, **characterized in that** the shield means (23, 24; 25, 26; 71; 81) either completely block light or form colour filters.

3. A multi-direction camera in accordance with claim 1, **characterized in that** the shield means (23, 24; 25, 26) are arranged at or formed by a rim portion of entrance windows (21, 22) provided in a housing (1, 2) of the camera to receive the light beams in the at least two different viewing directions.

4. A multi-direction camera in accordance with claim 1, **characterized in that** the reflecting surfaces (31, 32) being disposed so as to form a junction including an angle, thus forming a prismatic arrangement, the shield member (81) extending between said junction and the lens means (4).

5. A multi-direction camera in accordance with claim 1, **characterized in that** the shield member (81) projects from the deflecting means (3) and is arranged in a plane being parallel to and preferably intersecting the axis of the lens means (4).

6. A multi-direction camera in accordance with claim 4 or 5, **characterized in that** the shield member (81) forms an integral part of holding means (8) carrying the light deflecting means (3).

7. A multi-direction camera in accordance with claim 1 or 2, **characterized in that** the shield means comprise a shield member (71) either completely blocking light or being formed as a colour filter, which is arranged on or immediately in front of the image sensing means (7) so as to overlie at least one junction defined between a pair of adjacent part images.

8. A multi-direction camera in accordance with one of claim 1 to 7, **characterized in that** the housing (1, 2) or a segment (2) thereof, which is formed with the windows (21, 22), is made from transparent material, those portions of its walls not forming windows carrying an opaque coating.

9. A multi-direction camera in accordance with one of claims 1 to 8, **characterized in that** the light deflecting means (3) is formed so as to receive light from two opposing viewing directions.

10. A multi-direction camera in accordance with claim 9, **characterized in that** the lens deflecting means is formed such that the two opposing viewing directions are perpendicular to the axis of the lens means (4).

11. A multi-direction camera in accordance with claim 9 or 10, **characterized in that** it is arranged at a forward end portion of an automobile such that the two opposing viewing directions are transverse to the travelling directions of the automobile.

12. A multi-direction camera in accordance with one of claim 1 to 11, **characterized in that** the deflecting means (3) comprises a plurality of reflecting planes (31, 32), each of which is associated to one of the viewing directions.

13. A multi-direction camera in accordance with claim 12, **characterized in that** the deflecting means (3) comprises an injection molded plastics member, optical quality inclined surfaces of which carry a light reflecting coating to form the reflecting planes.

14. A multi-direction camera in accordance with claim 13, **characterized in that** the deflecting means (3) comprises positioning means (34) formed integral therewith and cooperating with complementary positioning means (82) formed in holding means (8), which in turn is positively connected to the housing (1, 2).

## Patentansprüche

1. Mehrrichtungs-Kamera, umfassend eine Linseneinrichtung (4) und eine Lichtablenkungsvorrichtung (3) mit reflektierenden Oberflächen (31, 32), angeordnet gegenüber der Linseneinrichtung (4), welche Lichtstrahlen, die in mindestens zwei unterschiedlichen Sichtrichtungen empfangen wurden, zur Linseneinrichtung richten, und umfassend eine Bildabtastvorrichtung (7), auf die die Linseneinrichtung (4) das von der Lichtablenkungs-Vorrichtung (3) empfangene Licht fokussiert, um eine Anzahl von benachbarten Teilbildern hierauf herzustellen, wobei jedes einer der Sichtrichtungen entspricht, die Linsenvorrichtung (4), die Lichtablenkungsvorrichtung (3) und die Bildabtastvorrichtung (7) in einem Gehäuse (1, 2) angeordnet sind, das in der Regel opak ist und transparente Fenster (21, 22) aufweist, die jeder der Sichtrichtungen zugeordnet sind, und eine Markierung bildende Vorrichtungen (23, 24, 25; 71; 81), die eine visuell unterscheidbare Linie oder einen visuell unterscheidbaren Bereich bei mindestens einer zwischen zwei benachbarten Teilbildern definierte Verbindung herstellen, welche auf der Bildabtastvorrichtung (7) gebildet werden, wobei die eine Markierung erzeugende Vorrichtung durch Blendenvorrichtungen (23, 24; 25, 26; 71; 81) gebildet werden, **dadurch gekennzeichnet, dass** die Blendenvorrichtungen die reflektierenden Oberflächen optisch trennen und verhindern, dass Licht, welches in eines der Fenster (21, 22) eintritt, zwischen einer reflektierenden Oberfläche (31, 32) und der Linseneinrichtung (4) verläuft und durch das andere Fenster (22, 21) in Richtung der anderen reflektierenden Oberfläche (32, 31) reflektiert wird.

2. Eine Mehrrichtungs-Kamera gemäß Anspruch 1, **dadurch gekennzeichnet, dass** die Blendvorrichtungen (23, 24; 25, 26; 71; 81) entweder vollständig Licht blockieren oder Farbfilter bilden.

3. Mehrrichtungs-Kamera gemäß Anspruch 1, **dadurch gekennzeichnet, dass** die Blendenvorrichtungen (23, 24; 25, 26) bei einem Randteil der Eintrittfenster (21, 22) angeordnet sind oder durch diesen gebildet werden, welche in einem Gehäuse (1, 2) der Kamera vorgesehen sind, um die Lichtstrahlen in den mindestens zwei unterschiedlichen Sichtrichtungen aufzunehmen.

4. Mehrrichtungs-Kamera gemäß Anspruch 1, **dadurch gekennzeichnet, dass** die reflektierenden Oberflächen (31, 32), so angeordnet sind, dass sie eine einen Winkel einschließende Verbindung und somit eine prismatische Anordnung bilden, wobei sich das Blendenelement 81 zwischen der Verbindung und der Linseneinrichtung (4) erstreckt.

5. Mehrrichtungs-Kamera gemäß Anspruch 1, **dadurch gekennzeichnet, dass** die Blendeneinrichtung (81) aus der Ablenkungsvorrichtung (3) herausragt und in einer Ebene parallel zur Achse der Linsenvorrichtung (4) angeordnet ist und diese vorzugsweise kreuzt.

6. Mehrrichtungs-Kamera gemäß Anspruch 4 oder 5, **dadurch gekennzeichnet, dass** das Blendenelement (81) einen integralen Teil der Haltevorrichtung (8) bildet, welche die Lichtablenkungsvorrichtung (3) trägt.

7. Mehrrichtungs-Kamera gemäß Anspruch 1 oder 2, **dadurch gekennzeichnet, dass** die Blendenvorrichtung ein Blendenelement (71) umfasst, das entweder das Licht vollständig blockiert oder als Farbfilter ausgebildet ist, und das an der Bildabtastvorrichtung (7) oder dieser unmittelbar gegenüber angebracht ist, so dass sie über mindestens einer, zwischen einem Paar benachbarter Teilbilder definierten Verbindung liegt.

8. Mehrrichtungs-Kamera gemäß einem der Ansprüche 1 bis 7, **dadurch gekennzeichnet, dass** das Gehäuse (1,2) oder ein Segment (2) desselben, das mit den Fenstern (21, 22) gebildet ist, aus transparentem Material hergestellt ist, dessen Wandteile keine Fenster bilden, die eine opake Beschichtung tragen.

9. Mehrrichtungs-Kamera gemäß einem der Ansprüche 1 bis 8, **dadurch gekennzeichnet, dass** die Lichtablenkungsvorrichtung (3) so ausgebildet ist, dass sie Licht von zwei einander gegenüberliegenden Sichtrichtungen aufnimmt.

10. Mehrschicht-Kamera gemäß Anspruch 9, **dadurch gekennzeichnet, dass** die Linsenablenkungsvorrichtung derart ausgebildet ist, dass die zwei einander gegenüberliegenden Sichtrichtungen senkrecht zur Achse der Linseneinrichtung (4) verlaufen.

11. Mehrrichtungs-Kamera gemäß Anspruch 9 oder 10, **dadurch gekennzeichnet, dass** sie an einem vorderen Endteil eines Automobils derart angeordnet ist, dass die beiden einander gegenüberliegenden Sichtrichtungen quer zu den Bewegungsrichtungen des Automobils verlaufen.

12. Mehrrichtungs-Kamera gemäß einem der Ansprüche 1 bis 11, **dadurch gekennzeichnet, dass** die Ablenkungsvorrichtung (3) eine Vielzahl von reflektierenden Ebenen (31, 32) umfasst, von denen jede einer der Sichtrichtungen zugeordnet ist.

13. Mehrrichtungs-Kamera gemäß Anspruch 12, **dadurch gekennzeichnet, dass** die Ablenkungsvorrichtung (3) ein spritzgegossenes Kunststoffelement umfasst, dessen geneigte Oberflächen optischer Qualität einen Licht reflektierenden Überzug tragen, um die reflektierenden Ebenen zu bilden.

14. Mehrrichtungs-Kamera gemäß Anspruch 13, **dadurch gekennzeichnet, dass** die Abenkungsvorrichtung (3) eine damit integral gebildete Positionierungsvorrichtung (34) umfasst und mit einer komplementären Positionierungsvorrichtung (82), die in der Haltevorrichtung (8) gebildet ist, zusammenarbeitet, welche ihrerseits positiv mit dem Gehäuse (1, 2) verbunden ist.

## Revendications

1. Appareil de prise de vues multidirectionnel, comprenant un moyen d'objectif (4) et un moyen de déviation de lumière (3) comportant des surfaces réfléchissantes (31, 32) agencé devant le moyen d'objectif (4) et dirigeant les faisceaux de lumière reçus dans au moins deux directions d'observation différentes vers le moyen d'objectif (4), et comprenant un moyen de détection d'image (7), sur lequel le moyen d'objectif (4) focalise la lumière reçue depuis le moyen de déviation de lumière (3) afin de produire un nombre d'images partielles adjacentes sur celui-ci, chacune correspondant à l'une des directions d'observation, le moyen d'objectif (4), le moyen de déviation de lumière (3) et le moyen de détection d'image (7) étant agencés dans un boîtier (1, 2) généralement opaque et comportant des fenêtres transparentes (21, 22) associées à chacune des directions d'observation, et
des moyens de génération de marque (23, 24 ; 25, 26 ; 71 ; 81) produisant une ligne ou une région visuellement distinctive au niveau d'au moins une jonction définie entre deux images partielles adjacentes formées sur le moyen de détection d'image (7) les moyens de génération de marque étant formés par des moyens de protection (23, 24 ; 25, 26 ; 71 ; 81)
**caractérisé en ce que** les moyens de protection isolent optiquement les surfaces réfléchissantes et empêchent la lumière entrant dans l'une des fenêtres (21, 22) de passer entre une surface réfléchissante (31, 32) et le moyen d'objectif (4) et d'être réfléchi par l'autre fenêtre (22, 21) vers l'autre surface réfléchissante (32, 31).

2. Appareil de prise de vues multidirectionnel selon la revendication 1, **caractérisé en ce que** les moyens de protection (23, 24 ; 25, 26 ; 71 ; 81) soit bloquent complètement la lumière, soit forment des filtres de couleur.

3. Appareil de prise de vues multidirectionnel selon la revendication 1, **caractérisé en ce que** les moyens de protection (23, 24 ; 25, 26) sont agencés au niveau d'une partie de rebord de fenêtres d'entrée (21, 22) disposées dans un boîtier (1, 2) de l'appareil de prise de vues, soit formés par celle-ci afin de recevoir les faisceaux de lumière dans les au moins deux directions d'observation différentes.

4. Appareil de prise de vues multidirectionnel selon la revendication 1, **caractérisé en ce que** les surfaces réfléchissantes (31, 32) sont disposées de façon à former une jonction comprenant un angle, en formant ainsi un agencement prismatique, l'élément de protection (81) s'étendant entre ladite jonction et ledit moyen d'objectif (4).

5. Appareil de prise de vues multidirectionnel selon la revendication 1, **caractérisé en ce que** l'élément de protection (81) fait saillie depuis le moyen de déviation (3) et est agencé dans un plan qui est parallèle à l'axe du moyen d'objectif (4) et recoupe de préférence celui-ci.

6. Appareil de prise de vues multidirectionnel selon la revendication 4 ou 5, **caractérisé en ce que** l'élément de protection (81) fait partie intégrante du moyen de maintien (8) supportant le moyen de déviation de lumière (3).

7. Appareil de prise de vues multidirectionnel selon la revendication 1 ou 2, **caractérisé en ce que** les moyens de protection comprennent un élément de protection (71) soit bloquant complètement la lumière, soit formé en tant que filtre de couleur, qui est agencé sur le moyen de détection d'image (7) ou bien immédiatement devant celui-ci de façon à recouvrir au moins une jonction définie entre une paire d'images partielles adjacentes.

8. Appareil de prise de vues multidirectionnel selon l'une des revendications 1 à 7, **caractérisé en ce que** le boîtier (1,2) ou un segment (2) de celui-ci, qui est muni des fenêtres (21, 22), est réalisé à partir d'un matériau transparent, les parties de ses parois ne formant pas les fenêtres portant un revêtement opaque.

9. Appareil de prise de vues multidirectionnel selon l'une des revendications 1 à 8, **caractérisé en ce que** le moyen de déviation de lumière (3) est formé de façon à recevoir de la lumière provenant de deux directions d'observation opposées.

10. Appareil de prise de vues multidirectionnel selon la revendication 9 **caractérisé en ce que** le moyen de déviation de lumière est formé de sorte que les deux directions d'observation opposées sont perpendiculaires à l'axe du moyen d'objectif (4).

11. Appareil de prise de vues multidirectionnel selon la revendication 9 ou 10, **caractérisé en ce qu'**il est agencé au niveau d'une partie d'extrémité avant d'une automobile de sorte que les deux directions d'observation opposées sont transversales aux directions de déplacement de l'automobile.

12. Appareil de prise de vues multidirectionnel selon l'une des revendications 1 à 11, **caractérisé en ce que** le moyen de déviation (3) comprend une pluralité de plans réfléchissants (31, 32), dont chacun est associé à l'une des directions d'observation.

13. Appareil de prise de vues multidirectionnel selon la revendication 12, **caractérisé en ce que** le moyen de déviation (3) comprend un élément en matière plastique moulé par injection, dont les surfaces inclinées de qualité optique portent un revêtement réfléchissant la lumière afin de former les plans réfléchissants.

14. Appareil de prise de vues multidirectionnel selon la revendication 13, **caractérisé en ce que** le moyen de déviation (3) comprend un moyen de positionnement (34) formé de façon intégrée avec celui-ci et coopérant avec un moyen de positionnement complémentaire (82) formé dans le moyen de maintien (8), qui à son tour est solidement relié au boîtier (1, 2).
